# EUROPÄISCHE PATENTSCHRIFT

(11) **EP 3 007 817 B1**
(45) Veröffentlichungstag und Bekanntmachung des Hinweises auf die Patenterteilung: **09.08.2017**
(21) Anmeldenummer: 14729017.5
(22) Anmeldetag: 11.06.2014
(51) Int. Cl.: B01J 19/00, B01J 19/18, C08F 2/00, C08G 69/28, C08L 77/06

(54) **POLYMERISATIONSVERFAHREN UNTER ABSCHEIDUNG EINER GASFÖRMIGEN SUBSTANZ**
POYMERISATION PROCESS UNDER SEPARATION OF A GASEOUS SUBSTANCE
PROCÉDÉ DE POLYMÉRISATION AVEC SÉPARATION D'UNE SUBSTANCE GAZEUSE

(30) Priorität: 12.06.2013 EP 13171655
(43) Veröffentlichungstag der Anmeldung: 20.04.2016
(73) Patentinhaber: BASF SE, 67056 Ludwigshafen am Rhein (DE)
(72) Erfinder: ZHU, Ning, 68163 Mannheim (DE); STAMMER, Achim, 67251 Freinsheim (DE); CLAUSS, Joachim, 64297 Darmstadt (DE); KORY, Gad, 69251 Gaiberg (DE)
(86) Internationale Anmeldenummer: PCT/EP2014/062121
(87) Internationale Veröffentlichungsnummer: WO 2014/198767

(56) Entgegenhaltungen:
- EP-A1- 0 267 025
- EP-A1- 2 471 594
- DE-B3-102006 047 942
- FR-A1- 2 335 552
- US-A- 2 993 842

## Beschreibung

Die vorliegende Erfindung betrifft ein Verfahren zur Synthese eines Polymers, insbesondere eines Polyamids, unter Abscheidung einer gasförmigen Substanz, insbesondere von Wasser.

### STAND DER TECHNIK

Die Herstellung einer Vielzahl technischer Polymere erfolgt durch eine Polykondensation, bei der der Molekulargewichtsaufbau mit der Freisetzung einer niedermolekularen Komponente einhergeht, die in der Regel zumindest teilweise aus dem Reaktionsgemisch entfernt werden muss, z. B. um das angestrebte Molekulargewicht und/oder die angestrebten Produkteigenschaften zu erzielen.

Eine wichtige Klasse der Polykondensationspolymere sind die Polyamide. Sie dienen neben den Hauptanwendungsbereichen für Folien, Fasern und Werkstoffen einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Die Herstellung von Polyamid 66 erfolgt überwiegend durch Polykondensation sogenannter AH-Salzlösungen, d. h. von wässrigen Lösungen, die Adipinsäure und 1,6-Diaminohexan (Hexamethylendiamin) in stöchiometrischen Mengen enthalten. Das klassische Verfahren zur Herstellung von Polyamid 6 ist die hydrolytische ringöffnende Polymerisation von ε-Caprolactam, die immer noch von sehr großer technischer Bedeutung ist. Konventionelle Herstellverfahren für Polyamid 6 und Polyamid 66 sind z. B. in Kunststoffhandbuch, ¾ Technische Thermoplaste: Polyamide, Carl Hanser Verlag, 1998, München, S. 42-71, beschrieben.

Eine spezielle Klasse technischer Kunststoffe, die breite Verwendung gefunden haben, sind teilkristalline oder amorphe, thermoplastische, teilaromatische Polyamide, die sich insbesondere durch ihre hohe Temperaturbeständigkeit auszeichnen und daher auch als Hochtemperatur-Polyamide (HTPA) bezeichnet werden.

Speziell bei der Synthese von Hochtemperaturpolyamiden ist es notwendig, Wasser aus der Reaktionsschmelze zu entfernen. So beginnt die Herstellung dieser HTPA in der Regel mit der Bildung einer wässrigen Salzlösung aus wenigstens einem Diamin und wenigstens einer Dicarbonsäure sowie optional weiteren Monomerkomponenten, wie Lactamen, ω-Aminosäuren, Monoaminen, Monocarbonsäuren und Mischungen davon, mit der Maßgabe, dass wenigstens eine der Komponenten eine aromatische Gruppe aufweist. An die Bildung der Salzlösung schließt sich dann eine Oligomerisierung in der flüssigen Phase an, während der in der Regel noch keine Abtrennung von Wasser erfolgt. Am Ende dieser Oligomerisierung weisen die Oligomere im Mittel beispielsweise 4 bis 10 Wiederholungseinheiten bei einem Umsatz von etwa 70 bis 80 % auf. Zum weiteren Molekulargewichtsaufbau stehen dann zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Es besteht insbesondere ein Bedarf an geeigneten Vorrichtungen und Verfahren zur Durchführung dieser Schmelzekondensation.

Es ist beispielsweise bekannt, eine Präpolymerschmelze, die Wasser enthält, in einem Reaktor bei einer Temperatur von ca. 350 °C und einem Druck im Bereich von 10 bis 20 bar zur Reaktion zu bringen. Hierbei kommt es allerdings zu Ablagerungen an den Reaktorinnenwänden oberhalb der flüssigen Phase. Dies führt zu einer verschlechterten Produktqualität.

Die FR 2335552 A1 beschreibt ein Verfahren und eine Vorrichtung zur Herstellung von Polykondensaten.

Die EP 2471594 A1 beschreibt einen Reaktor umfassend ein im Wesentlichen rohrförmiges Reaktorgehäuse und ein Verfahren zur kontinuierlichen Polymerisation.

Die EP 0267025 A1 beschreibt einen Dünnschichtverdampfer für hochviskose Fluide mit einer Behandlungskammer, welche von einem Heiz- oder Kühlmantel umgeben und einem koaxialen Rotor ausgestattet ist.

Die US 2993842 A beschreibt eine Vorrichtung für die Destillation von Flüssigkeiten und ein Verfahren für die fraktionierende Destillation von Flüssigkeiten.

DE 102006047942 B3 beschreibt eine Vorrichtung mit einem horizontal angeordneten zylinderförmigen Reaktorgehäuse und ein Verfahren für die chargenweise Polykondensation von Polymeren.

### ZUSAMMENFASSUNG DER ERFINDUNG

Der Gegenstand der Erfindung ist ein Verfahren zur Synthese eines Polymers durch Polymerisation einer Präpolymerschmelze (6) zu einer Polymerschmelze (7) unter Abscheidung einer gasförmigen Substanz (8) in einer Vorrichtung umfassend
- einen Reaktionsraum (1), der einen im Wesentlichen kreiszylinderförmigen oberen Abschnitt (11), der von zwei Kreisflächen (111, 112) und einer Mantelfläche (113) begrenzt wird und eine Zylinderlängsachse aufweist, sowie einen unteren Abschnitt (12) umfasst,
- eine Einlassöffnung (2), die in einer Kreisfläche (111, 112) oder der Mantelfläche (113) des oberen Abschnitts (11) angeordnet ist,
- eine erste Auslassöffnung (3), die in einer Wand des unteren Abschnitts (12) angeordnet ist,
- eine zweite Auslassöffnung (4), die in der Mantelfläche (113) des oberen Abschnitts (11) angeordnet ist und der ersten Auslassöffnung (3) gegenüber liegt, und
- eine Abtrageeinrichtung (5), die um die Zylinderlängsachse drehbar angeordnet ist und beide Kreisflächen (111, 112) und die Mantelfläche (113) berührt, wobei die Abtrageeinrichtung (5) als Rotor mit mehreren Rotorblättern (51) ausgebildet ist, und die in die Präpolymerschmelze (6) eintaucht, und wobei der wenigstens eine Kreisfläche (111, 112) des oberen Abschnitts (11) einschließende Querschnitt des Reaktionsraums (1) im Wesentlichen tropfenförmig ist,
mit den folgenden Verfahrensschritten:
a) Zuführen einer Präpolymerschmelze (6) in einen Reaktionsraum (1) durch eine Einlassöffnung (2),
b) Polymerisation der Präpolymerschmelze (6) zu einer Polymerschmelze (7),
c) Entfernen der Polymerschmelze (7) aus dem Reaktionsraum (1) durch eine erste Auslassöffnung (3) im Reaktionsraum (1), und
d) Entfernen einer gasförmigen Substanz (8) aus dem Reaktionsraum (1) durch eine zweite Auslassöffnung (4) im Reaktionsraum (1),
wobei Ablagerungen an mindestens einer Innenwand des Reaktionsraums (1) von einer Abtrageeinrichtung (5), die in die Präpolymerschmelze (6) eintaucht, entfernt und in die Präpolymerschmelze (6) transportiert werden. Das erfindungsgemäße Verfahren ist insbesondere für eine kontinuierliche Polymersynthese geeignet. Es ist bevorzugt, dass die Abtrageeinrichtung die Ablagerungen kontinuierlich entfernt und die Innenwand des Reaktionsraums so von Ablagerungen freihält.

Eine spezielle Ausführungsform ist ein Verfahren zur Synthese eines aliphatischen oder teilaromatischen Polyamids, bei dem man ein Präpolymer des aliphatischen oder teilaromatischen Polyamids bereitstellt und der erfindungsgemäß eingesetzten Vorrichtung zuführt.

### BESCHREIBUNG DER ERFINDUNG

Ein Präpolymer bezeichnet im Sinne der Erfindung eine Zusammensetzung, die polymere Verbindungen mit komplementären funktionellen Gruppen enthält, die zu einer Kondensationsreaktion unter Molekulargewichtserhöhung befähigt sind.

Der Begriff "Präpolymerschmelze" bezeichnet im Sinne der Erfindung eine fließfähige Zusammensetzung des jeweils vorliegenden Reaktionsgemischs, das die Präpolymere enthält. Dabei muss die Temperatur der Präpolymerschmelze nicht zwingend oberhalb der Schmelztemperatur des reinen Präpolymers liegen. Die Fließfähigkeit kann auch durch die Anwesenheit anderer Komponenten der Präpolymerschmelze, wie z. B. Wasser, niedermolekularer Oligomere, etc., gegeben sein. In einer speziellen Ausführungsform liegt in der Präpolymerschmelze das Präpolymer selbst schmelzförmig vor.

Die Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde PMMA als Polymerstandard mit niedriger Polydispersität eingesetzt.

Durch die Einlassöffnung des erfindungsgemäßen Verfahrens kann eine Präpolymerschmelze in den Reaktionsraum eingebracht werden. Nach Polymerisation zu einem Polymer kann die erhaltende Polymerschmelze durch die erste Auslassöffnung aus dem Reaktionsraum entnommen werden. Die Abscheidung der gasförmigen Substanz kann durch die zweite Auslassöffnung erfolgen. Die Abtrageeinrichtung ermöglicht es, durch Drehung um die Zylinderlängsachse Ablagerungen an den Innenwänden des Reaktionsraums oberhalb der Schmelze zu entfernen. Durch Veränderung der Abmessungen des Reaktionsraums kann dessen Sammelvolumen variiert werden. Damit ändert sich bei einer kontinuierlichen Polymersynthese auch die Verweilzeit der Schmelze im Reaktionsraum.

Im Rahmen der vorliegenden Erfindung wird unter berührt ein nicht ständiger Kontakt mit verstanden. Insbesondere wird ein nicht ständiger Kontakt mit beiden Kreisflächen und/oder der Mantelfläche der erfindungsgemäßen Vorrichtung verstanden, so dass sich ein dünner Film an den Kreisflächen und/oder der Mantelfläche des Reaktionsraumes ausbilden kann.

Ein Querschnitt des unteren Abschnitts verringert sich bevorzugt vom oberen Abschnitt zu der ersten Auslassöffnung. Wenigstens eine Kreisfläche des oberen Abschnitts einschließende Querschnitt des Reaktionsraums ist im Wesentlichen tropfenförmig. Dadurch wird im ersten Abschnitt des Reaktionsraums ein großes freies Volumen bereitgestellt, während die Verengung des Reaktionsraums im unteren Abschnitt dazu führt, dass eine in dem Reaktionsraum befindliche Schmelze sich hier mit sinkendem Abstand zu der ersten Auslassöffnung schneller auf die erste Auslassöffnung zubewegt. Bei kontinuierlicher Polymerisation kann hierdurch eine Polymerschmelze, welche sich im unteren Bereich des Reaktionsraums sammelt, trotz ihrer im Vergleich zur eingeführten Präpolymerschmelze höheren Viskosität sicher aus dem Reaktionsraum entfernt werden. Die Einlassöffnung kann grundsätzlich an jeder Position des oberen Abschnitts des Reaktionsraums angeordnet sein und sich bei Durchführung einer Polymerisationsreaktion oberhalb oder innerhalb der flüssigen Phase befinden. Bevorzugt ist es allerdings, dass die Einlassöffnung in der Mantelfläche des oberen Abschnitts angeordnet ist, so dass die Abtrageeinrichtung nicht nur zum Entfernen von Ablagerungen, sondern auch zum Abstreifen einer durch die Einlassöffnung eingebrachten Präpolymerschmelze genutzt werden kann.

Die Abtrageeinrichtung ist als Rotor mit mehreren Rotorblättern ausgebildet. Diese Rotorblätter weisen in einer Ausführungsform der Erfindung Öffnungen auf. Bevorzugt sind die Rotorblätter austauschbar. In Abhängigkeit von der Viskosität der eingesetzten Präpolymerschmelze kann der Rotor dann mit auf die Viskosität optimierten Rotorblättern versehen werden. So kann der Rotor beispielsweise zur Polymerisation einer hochviskosen Präpolymerschmelze mit Rotorblättern versehen werden, deren Oberfläche überwiegend von Öffnungen eingenommen wird.

Es ist erfindungsgemäß bevorzugt, dass der Reaktionsraum doppelwandig ausgebildet ist. Dies ist vorteilhaft angesichts der hohen Temperaturen, die notwendig sind, um Oligomere bzw. Polymere in der Schmelze zu halten, eine gute Wärmeisolierung des Reaktionsraums zu gewährleisten und außerdem, um im Fall einer Beschädigung des Reaktionsraums einen Austritt der heißen Schmelze zu unterbinden. Die Abtrageeinrichtung taucht in die Präpolymerschmelze ein. Auf diese Weise wird die Abtrageeinrichtung von der Präpolymerschmelze ständig von den abgetragenen Ablagerungen gereinigt, welche bei der Temperatur der Schmelze in die flüssige Phase übergehen.

Wenn die Einlassöffnung in einer Mantelfläche eines zylinderförmigen ersten Abschnitts des Reaktionsraums angeordnet ist, ist es bevorzugt, dass die Abtrageeinrichtung um die Zylinderlängsachse des ersten Abschnitts in die Richtung gedreht wird, in welche die Präpolymerschmelze aus der Einlassöffnung in den Reaktionsraum läuft. Dadurch kann die Abtrageeinrichtung nicht nur zur Entfernung der Ablagerungen genutzt werden, sondern beschleunigt zudem den Transport der Präpolymerschmelze in den Reaktionsraum.

Es ist weiterhin bevorzugt, dass die Geschwindigkeit, mit der die Polymerschmelze sich auf die zweite Auslassöffnung zubewegt mit sinkendem Abstand zu der ersten Auslassöffnung zunimmt. Dies ermöglicht ein zuverlässiges Entfernen der Polymerschmelze aus dem Reaktionsraum.

Grundsätzlich kann das erfindungsgemäße Verfahren mit jedem Polymer durchgeführt werden, das sich in eine Schmelze überführen lässt. Bevorzugt ist das Polymer ausgewählt unter thermoplastischen Polymeren. Besonders bevorzugt ist das Polymer ausgewählt unter Polyamiden, thermoplastischen Polyurethanen, Polyolefinen, vinylaromatischen Polymeren, Polyestern, Polyacetalen, Polycarbonaten, Polysulfonen, Polyethersulfonen und Mischungen davon.

Vorzugsweise ist das Polymer ein Polyamid und die gasförmige Substanz ist Wasserdampf. Eine spezielle Ausführungsform des erfindungsgemäßen Verfahrens ist daher ein Verfahren zur Synthese eines aliphatischen oder teilaromatischen Polyamids, bei dem man in Schritt a) ein Präpolymer des aliphatischen oder teilaromatischen Polyamids bereitstellt und der erfindungsgemäß eingesetzten Vorrichtung zuführt.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder können beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, besonders bevorzugt Monomethylester, Dimethylester, Monoethylester oder Diethylester vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkylkomponenten, insbesondere Methylethylester vor.

Die Bereitstellung des Polyamid-Präpolymers erfolgt durch Polykondensation einer wässrigen Zusammensetzung, die wenigstens eine zur Polyamidbildung geeignete Komponente enthält.

Bevorzugt enthält das Präpolymer (und dementsprechend das aliphatische oder teilaromatische Polyamid) Komponenten eingebaut, die ausgewählt sind unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren und Derivaten davon,
D) aliphatischen oder cycloaliphatischen Diaminen,
E) Monocarbonsäuren und Derivaten davon,
F) Monoaminen,
G) mindestens dreiwertigen Aminen,
H) Lactamen,
I) ω-Aminosäuren,
K) von A) bis I) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten C) oder D) vorhanden sein muss und keine der Komponenten A) und B) vorhanden sein darf. Für aliphatische Polyamide vom Typ PA Z (wie PA 6 oder PA 12) gilt die Maßgabe, dass mindestens die Komponente H) vorhanden sein muss.

Eine bevorzugte Ausführungsform sind teilaromatische Polyamide. Für teilaromatische Polyamide gilt die Maßgabe, dass mindestens eine der Komponenten A) oder B) und mindestens eine der Komponenten C) oder D) vorhanden sein muss.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen (z. B. 1, 2, 3 oder 4) C₁-C₄-Alkylrest auf. Insbesondere weisen substituierte aromatischen Dicarbonsäuren A) ein oder zwei C₁-C₄-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfoisophthalsäure.

Besonders bevorzugt wird als aromatische Dicarbonsäure A) Terephthalsäure, Isophthalsäure oder ein Gemisch aus Terephthalsäure und Isophthalsäure eingesetzt.

Bevorzugt weisen die erfindungsgemäß bereitgestellten teilaromatischen Polyamid-Präpolymere einen Anteil von aromatischen Dicarbonsäuren an allen Dicarbonsäuren von wenigstens 50 Mol%, besonders bevorzugt von 70 Mol% bis 100 Mol%, auf. In einer speziellen Ausführungsform weisen die nach dem erfindungsgemäßen Verfahren hergestellten teilaromatischen Polyamide (und die in Schritt a) bereitgestellten Präpolymere), einen Anteil an Terephthalsäure oder Isophthalsäure oder einem Gemisch aus Terephthalsäure und Isophthalsäure, bezogen auf alle Dicarbonsäuren von wenigstens 50 Mol%, bevorzugt von 70 Mol% bis 100 Mol%, auf.

Die aromatischen Diamine B) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine D) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin D) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin D) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin D) ausschließlich Hexamethylendiamin einpolymerisiert.

In einer weiteren speziellen Ausführung enthalten die teilaromatischen Polyamide als Diamin D) ausschließlich Bis-(4-aminocyclohexyl)-methan einpolymerisiert.

In einer weiteren speziellen Ausführung enthalten die teilaromatischen Polyamide als Diamin D) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin D) ausschließlich Isophorondiamin (IPDA) einpolymerisiert.

Die Präpolymere (und entsprechend die aliphatischen und die teilaromatischen Polyamide) können wenigstens eine Monocarbonsäure E) einpolymerisiert enthalten. Die Monocarbonsäuren E) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic^{®}-Säuren, Koch^{®}-Säuren und Mischungen davon.

Werden als Monocarbonsäuren E) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure E) ausgewählt unter Essigsäure, Propionsäure, Benzoesäure und Mischungen davon.

In einer speziellen Ausführung enthalten die Präpolymere (und entsprechend die aliphatischen und die teilaromatischen Polyamide) als Monocarbonsäure E) ausschließlich Propionsäure einpolymerisiert.

In einer weiteren speziellen Ausführung enthalten die Präpolymere (und entsprechend aliphatischen und die teilaromatischen Polyamide) als Monocarbonsäure E) ausschließlich Benzoesäure einpolymerisiert.

In einer weiteren speziellen Ausführung enthalten die Präpolymere (und entsprechend die aliphatischen und die teilaromatischen Polyamide) als Monocarbonsäure E) ausschließlich Essigsäure einpolymerisiert.

Die Präpolymere (und entsprechend die aliphatischen und die teilaromatischen Polyamide) können wenigstens ein Monoamin F) einpolymerisiert enthalten. Dabei enthalten die aliphatischen Polyamide nur aliphatische Monoamine oder alicyclische Monoamine einpolymerisiert. Die Monoamine F) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der Präpolymere (und entsprechend der aliphatischen und der teilaromatischen Polyamide) kann zusätzlich wenigstens ein mindestens dreiwertiges Amin G) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]hexan-1,6-diamin, N'-[(5-amino-1,3,3-trimethyl-cyclohexyl)methyl]-dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]-methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine G) eingesetzt.

Geeignete Lactame H) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren I) sind 6-Aminocapronsäure, 7-Aminoheptansäure, 11-Aminoundecansäure, 12-Aminododecansäure und Mischungen davon.

Geeignete von A) bis I) verschiedene, damit cokondensierbare Verbindungen K) sind wenigstens dreiwertige Carbonsäuren, Diaminocarbonsäuren, etc.

Geeignete Verbindungen K) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

In einer bevorzugten Ausführungsform dient das erfindungsgemäße Verfahren zur Herstellung eines aliphatischen Polyamids.

Das Polyamid ist dann vorzugsweise ausgewählt ist unter PA 6, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere handelt es sich bei dem aliphatischen Polyamid um PA 6, PA 66 oder PA 666, ganz besonders bevorzugt um PA 6.

In einer weiteren bevorzugten Ausführungsform dient das erfindungsgemäße Verfahren zur Herstellung eines teilaromatischen Polyamids.

Bevorzugt ist das Polyamid dann ausgewählt unter PA 6.T, PA 9.T, PA8.T, PA 10.T, PA 12.T, PA 6.I, PA 8.I, PA 9.I, PA 10.1, PA 12.1, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA6.T/6.10, PA6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/B.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Besonders bevorzugt ist das Polyamid dann ausgewählt unter PA 6.T, PA 9.T, PA 10.T, PA 12.T, PA 6.I, PA 9.1, PA 10.I, PA 12.I, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T
und Copolymeren und Gemischen davon.

In einer speziellen Ausführung handelt es sich bei dem teilaromatischen Polyamid um PA 6.T/6.I.
In einer weiteren speziellen Ausführung handelt es sich bei dem teilaromatischen Polyamid um PA 6.T/6.I/IPDA.T/IPDA.I.
In einer weiteren speziellen Ausführung handelt es sich bei dem teilaromatischen Polyamid um PA 6.T/6.I/MXDA.T/MXDA.I.

Zur Herstellung der bereitgestellten Präpolymere wird im Allgemeinen eine wässrige Zusammensetzung eingesetzt, die wenigstens eine zur Polyamidbildung geeignete Komponente enthält. Die Herstellung der Präpolymere kann grundsätzlich nach üblichen, dem Fachmann bekannten Verfahren erfolgen. Ein geeignetes Verfahren zur Herstellung von teilaromatischen Polyamid-Oligomeren ist z. B. in der EP 0 693 515 A1 beschrieben.
Die zum Einsatz in dem erfindungsgemäßen Verfahren bereitgestellten Präpolymere (speziell die Polyamid-Präpolymere) weisen vorzugsweise ein zahlenmittleres Molekulargewicht Mₙ, von etwa 500 bis etwa 12000 g/mol auf, bevorzugt von etwa 1000 bis 4000 g/mol.
Die Herstellung der in dem erfindungsgemäßen Verfahren eingesetzten Präpolymerschmelze und entsprechend des erhaltenen Polymers kann grundsätzlich nach üblichen, dem Fachmann bekannten Verfahren erfolgen. Ein geeignetes Verfahren zur Herstellung von Präpolymeren, die wenigstens eine Wiederholungseinheit mit einer aromatischen Gruppe und wenigstens eine Wiederholungseinheit mit einer aliphatischen oder cycloaliphatischen Gruppe eingebaut enthalten, ist in der EP 0 693 515 A1 beschrieben, auf die hier in vollem Umfang Bezug genommen wird.

Auch wenn es grundsätzlich möglich ist, das erfindungsgemäße Verfahren in jeder hierzu geeigneten Vorrichtung durchzuführen, ist es doch bevorzugt, dass es in einer Vorrichtung gemäß der vorliegenden Erfindung durchgeführt wird.
Wird das erfindungsgemäße Verfahren zur Herstellung aliphatischer Polyamide eingesetzt, weisen diese vorzugsweise ein zahlenmittleres Molekulargewicht Mₙ in einem Bereich von 13000 bis 28000 g/mol auf.

Wird das erfindungsgemäße Verfahren zur Herstellung teilaromatischer Polyamide eingesetzt, weisen diese vorzugsweise ein zahlenmittleres Molekulargewicht Mₙ in einem Bereich von 13000 bis 25000 g/mol, besonders bevorzugt von 15000 bis 20000 g/mol, auf.

Die nach dem erfindungsgemäßen Verfahren erhaltenen aliphatischen Polyamide weisen vorzugsweise ein gewichtsmittleres Molekulargewicht M_{w} in einem Bereich von 20000 bis 140000 g/mol auf.
Die nach dem erfindungsgemäßen Verfahren erhaltenen teilaromatischen Polyamide weisen vorzugsweise ein gewichtsmittleres Molekulargewicht M_{w} in einem Bereich von 25000 bis 125000 g/mol auf.
Die nach dem erfindungsgemäßen Verfahren erhaltenen aliphatischen und teilaromatischen Polyamide weisen vorzugsweise eine Polydispersität PD (= M_{w}/Mₙ) von höchstens 6, besonders bevorzugt von höchstens 5, insbesondere von höchstens 3,5, auf.

### FIGURENBESCHREIBUNG UND BEISPIELE

Die Erfindung wird nun anhand eines Ausführungsbeispiels mit Bezug zu den Zeichnungen erläutert.
- Fig. 1: zeigt eine perspektivische Darstellung einer Vorrichtung gemäß einer Ausführungsform des erfindungsgemäßen Verfahrens.
- Fig. 2: zeigt einen Schnitt durch eine Vorrichtung des erfindungsgemäßen Verfahrens.

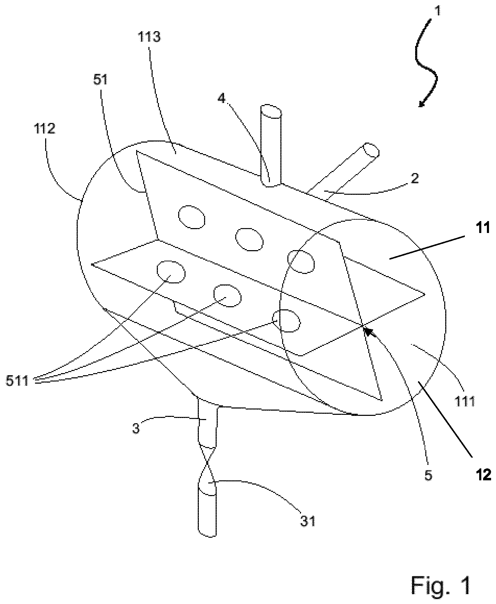

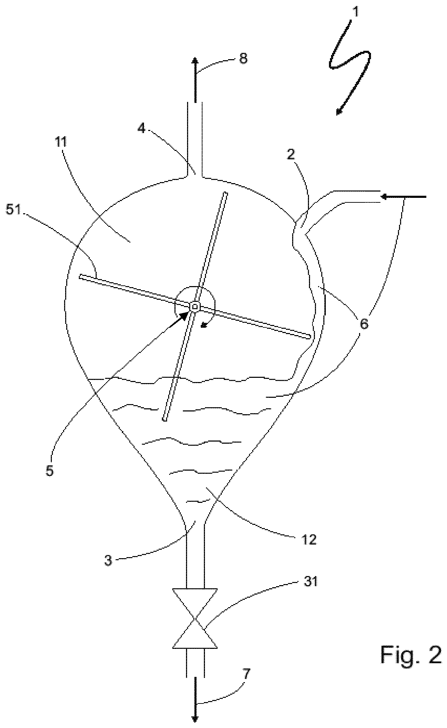

Die Fig. 1 und 2 zeigen ein Ausführungsbeispiel des erfindungsgemäßen Verfahrens zur Synthese eines Polymers, die einen doppelwandigen Reaktionsraum 1 umfasst. Dieser besteht aus einem oberen Abschnitt 11 und einem unteren Abschnitt 12. Der obere Abschnitt ist im Wesentlichen kreiszylinderförmig und weist zwei Kreisflächen 111, 112 und eine Mantelfläche 113 auf. Die Mantelfläche 113 schließt den oberen Abschnitt 11 nicht vollständig ein, sondern geht vielmehr in die Wand des unteren Abschnitts 12 über. Der untere Abschnitt 12 ist so ausgeführt, dass der in Fig. 2 dargestellte Querschnitt des Reaktionsraums 1 im Wesentlichen tropfenförmig ist. Eine Einlassöffnung 2 befindet sich in der oberen Hälfte der Mantelfläche 113 des oberen Abschnitts 11. Eine erste Auslassöffnung 3 ist an der tiefsten Stelle des unteren Abschnitts 12 in dessen Wand angeordnet und mit einem Auslassventil 31 verbunden.

Eine zweite Auslassöffnung 4 befindet sich im Wesentlichen gegenüber der ersten Auslassöffnung 3 in der Mantelfläche 113 des oberen Abschnitts 11. Eine Abtrageeinrichtung 5 ist als Rotor ausgeführt, der um die Zylinderlängsachse des oberen Abschnitts 11 drehbar angeordnet ist. Dieser weist vier Rotorblätter 51 auf. Jedes Rotorblatt 51 berührt beide Kreisflächen 111, 112 und die Mantelfläche 113. Die Rotorblätter 51 sind austauschbar. In der in Fig. 1 dargestellten Ausführungsform der Erfindung weisen die Rotorblätter 51 Öffnungen 511 auf, welche besonders gut dazu geeignet sind, um bei der Polymerisation von hochviskosen Präpolymerschmelzen verwendet zu werden.

In einer Ausführungsform des erfindungsgemäßen Verfahrens wird die Vorrichtung gemäß der voranstehend beschriebenen Ausführungsform der Erfindung verwendet, um darin das Polymer (speziell ein Polyamid PA 6T/6I) zu synthetisieren. Hierbei wird eine Präpolymerschmelze 6 dem Reaktionsraum 1 durch die Einlassöffnung 2 kontinuierlich zugeführt und sammelt sich in einem unteren Teil des oberen Abschnitts 11 sowie im unteren Abschnitt 12 des Reaktionsraums 1. In dem Reaktionsraum 1 erfolgt eine Polymerisation der Präpolymerschmelze 6 zu einer Polymerschmelze 7. Aufgrund ihrer gegenüber der Präpolymerschmelze höheren Dichte, sinkt die Polymerschmelze 7 auf den Boden des Reaktionsraums 1. Dort wird sie durch die erste Auslassöffnung 3 und das Auslassventil 31 dem Reaktionsraum entnommen. Unter Polymerschmelze 7 wird hierbei eine Schmelze verstanden, die sich im Reaktionsgleichgewicht befindet und durchaus noch Oligomere und Wasser enthalten kann. Wasser verdampft während des erfindungsgemäßen Verfahrens und wird als gasförmige Substanz 8 durch die zweite Auslassöffnung 4 aus dem Reaktionsraum 1 entfernt. Durch Verdampfung und/oder Hochspritzen von in der Präpolymerschmelze 6 enthaltenen Monomeren oder kurzkettigen Oligomeren, die oberhalb der flüssigen Phase an der Innenwand des oberen Abschnitts 11 des Reaktionsraums 1 zur längerkettigen Oligomeren oder Polymer polymerisieren, bilden sich an dieser Innenwand Ablagerungen. Die Abtrageeinrichtung 5 wird daher kontinuierlich gedreht, um diese Ablagerungen von der Innenwand des Reaktionsraums 1 abzutragen und in die Präpolymerschmelze 6 zu transportieren. Aufgrund der dort vorherrschenden hohen Temperaturen lösen sie sich von Rotorblättern 51 der Abtrageeinrichtung 5 und werden von der Präpolymerschmelze 6 aufgenommen. Indem sich die Abtrageeinrichtung 5 in dieselbe Richtung dreht, in welcher die Präpolymerschmelze 6 durch die Einlassöffnung 2 in den Reaktionsraum 1 fließt, d. h. in Fig. 2 im Uhrzeigersinn, beschleunigen die Rotorblätter 51 zudem den Transport der Präpolymerschmelze 6 in den Reaktionsraum 1.

Indem diese Ausführungsform des erfindungsgemäßen Verfahrens die Bildung von Ablagerungen im Reaktionsraum 1 vermeidet bzw. bereits gebildete Ablagerungen entfernt, ist eine kontinuierliche Verfahrensführung über einen langen Zeitraum möglich, ohne das Verfahren zur manuellen Entfernung der Ablagerungen unterbrechen zu müssen.

### Bezugszeichenliste

- 1: Reaktionsraum
- 2: Einlassöffnung
- 3: erste Auslassöffnung
- 4: zweite Auslassöffnung
- 5: Abtrageeinrichtung
- 6: Präpolymerschmelze
- 7: Polymerschmelze
- 8: gasförmige Substanz
- 11: oberer Abschnitt
- 12: unterer Abschnitt
- 31: Auslassventil
- 51: Rotorblatt
- 111: Kreisfläche
- 112: Kreisfläche
- 113: Mantelfläche
- 511: Öffnung(en)

## Patentansprüche

1. Verfahren zur Synthese eines Polymers durch Polymerisation einer Präpolymerschmelze (6) zu einer Polymerschmelze (7) unter Abscheidung einer gasförmigen Substanz (8) in einer Vorrichtung umfassend
- einen Reaktionsraum (1), der einen im Wesentlichen kreiszylinderförmigen oberen Abschnitt (11), der von zwei Kreisflächen (111, 112) und einer Mantelfläche (113) begrenzt wird und eine Zylinderlängsachse aufweist, sowie einen unteren Abschnitt (12) umfasst,
- eine Einlassöffnung (2), die in einer Kreisfläche (111, 112) oder der Mantelfläche (113) des oberen Abschnitts (11) angeordnet ist,
- eine erste Auslassöffnung (3), die in einer Wand des unteren Abschnitts (12) angeordnet ist,
- eine zweite Auslassöffnung (4), die in der Mantelfläche (113) des oberen Abschnitts (11) angeordnet ist und der ersten Auslassöffnung (3) gegenüber liegt, und
- eine Abtrageeinrichtung (5), die um die Zylinderlängsachse drehbar angeordnet ist und beide Kreisflächen (111, 112) und die Mantelfläche (113) berührt, wobei die Abtrageeinrichtung (5) als Rotor mit mehreren Rotorblättern (51) ausgebildet ist, und die in die Präpolymerschmelze (6) eintaucht, und wobei der wenigstens eine Kreisfläche (111, 112) des oberen Abschnitts (11) einschließende Querschnitt des Reaktionsraums (1) im Wesentlichen tropfenförmig ist,
mit den folgenden Verfahrensschritten:
a) Zuführen einer Präpolymerschmelze (6) in einen Reaktionsraum (1) durch eine Einlassöffnung (2),
b) Polymerisation der Präpolymerschmelze (6) zu einer Polymerschmelze (7),
c) Entfernen der Polymerschmelze (7) aus dem Reaktionsraum (1) durch eine erste Auslassöffnung (3) im Reaktionsraum (1), und
d) Entfernen einer gasförmigen Substanz (8) aus dem Reaktionsraum (1) durch eine zweite Auslassöffnung (4) im Reaktionsraum (1),
**dadurch gekennzeichnet, dass** Ablagerungen an mindestens einer Innenwand des Reaktionsraums (1) von einer Abtrageeinrichtung (5), die in die Präpolymerschmelze (6) eintaucht, entfernt und in die Präpolymerschmelze (6) transportiert werden.

2. Verfahren nach Anspruch 1, **dadurch gekennzeichnet, dass**
- die Einlassöffnung (2) in einer Mantelfläche (113) eines zylinderförmigen ersten Abschnitts (11) des Reaktionsraums (1) angeordnet ist,
- die Abtrageeinrichtung (5) um die Zylinderlängsachse des ersten Abschnitts (11) in die Richtung gedreht wird, in welche die Präpolymerschmelze (6) aus der Einlassöffnung (2) in den Reaktionsraum (1) läuft.

3. Verfahren nach Anspruch 1 oder 2, **dadurch gekennzeichnet, dass** die Geschwindigkeit mit der die Polymerschmelze (7) sich auf die erste Auslassöffnung (3) zubewegt mit sinkendem Abstand zu der ersten Auslassöffnung (3) zunimmt.

4. Verfahren nach einem der Ansprüche 1 bis 3, **dadurch gekennzeichnet, dass** das Polymer ausgewählt ist unter thermoplastischen Polymeren, bevorzugt Polyamiden, thermoplastischen Polyurethanen, Polyolefinen, vinylaromatischen Polymeren, Polyestern, Polyacetalen, Polycarbonaten, Polysulfonen, Polyethersulfonen und Mischungen davon.

5. Verfahren nach einem der Ansprüche 1 bis 4, **dadurch gekennzeichnet, dass** das Polymer ein Polyamid ist und die gasförmige Substanz Wasserdampf ist.

6. Verfahren nach einem der Ansprüche 1 bis 5, **dadurch gekennzeichnet, dass** das Polymer ein teilaromatisches Polyamid ist, das wenigstens eine Wiederholungseinheit mit einer aromatischen Gruppe und wenigstens eine Wiederholungseinheit mit einer aliphatischen oder cycloaliphatischen Gruppe eingebaut enthält.

7. Verfahren nach einem der Ansprüche 1 bis 6, **dadurch gekennzeichnet, dass** das Polymer ein Polyamid ist, ausgewählt unter
PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 0.T/6, PA 0.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

## Claims

1. A process for synthesizing a polymer by polymerizing a prepolymer melt (6) to give a polymer melt (7) with separation of a gaseous substance (8) in an apparatus comprising
- a reaction space (1) comprising an essentially circular cylindrical upper section (11) which is bounded by two circular faces (111, 112) and one shell face (113) and has a longitudinal cylinder axis, and a lower section (12),
- an inlet orifice (2) disposed in a circular face (111, 112) or the shell face (113) of the upper section (11),
- a first outlet orifice (3) disposed in a wall of the lower section (12),
- a second outlet orifice (4) disposed in the shell face (113) of the upper section (11) opposite the first outlet orifice (3) and
- a removal device (5) which is disposed so as to be rotatable about the longitudinal cylinder axis and is in contact with both circular faces (111, 112) and the shell face (113), the removal device (5) taking the form of a rotor with several rotor blades (51), and which is immersed into the prepolymer melt (6), and wherein the cross section of the reaction space (1) which encloses at least one circular face (111, 112) of the upper section (11) is essentially droplet-shaped,
having the following process steps:
a) feeding a prepolymer melt (6) into a reaction space (1) through an inlet orifice (2),
b) polymerizing the prepolymer melt (6) to give a polymer melt (7),
c) removing the polymer melt (7) from the reaction space (1) through a first outlet orifice (3) in the reaction space (1), and
d) removing a gaseous substance (8) from the reaction space (1) through a second outlet orifice (4) in the reaction space (1),
wherein deposits on at least one inner wall of the reaction space (1) are removed by a removal device (5) immersed into the prepolymer melt (6), and transported into the prepolymer melt (6).

2. The process according to claim 1, wherein
- the inlet orifice (2) is disposed in a shell face (113) of a cylindrical first section (11) of the reaction space (1),
- the removal device (5) is rotated about the longitudinal cylinder axis of the first section (11) in the direction in which the prepolymer melt (6) runs out of the inlet orifice (2) into the reaction space (1).

3. The process according to claim 1 or 2, wherein the speed with which the polymer melt (7) moves toward the first outlet orifice (3) increases with falling distance from the first outlet orifice (3).

4. The process according to any of claims 1 to 3, wherein the polymer is selected from thermoplastic polymers, preferably polyamides, thermoplastic polyurethanes, polyolefins, vinylaromatic polymers, polyesters, polyacetals, polycarbonates, polysulfones, polyether sulfones and mixtures thereof.

5. The process according to any of claims 1 to 4, wherein the polymer is a polyamide and the gaseous substance is steam.

6. The process according to any of claims 1 to 5, wherein the polymer is a semiaromatic polyamide comprising at least one incorporated repeat unit having an aromatic group and at least one incorporated repeat unit having an aliphatic or cycloaliphatic group.

7. The process according to any of claims 1 to 6, wherein the polymer is a polyamide selected from
PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T and copolymers and mixtures thereof.

## Revendications

1. Procédé continu pour la synthèse d'un polymère par polymérisation d'une masse fondue (6) de prépolymère en une masse fondue (7) de polymère avec séparation d'une substance gazeuse (8) dans un dispositif comprenant
- une chambre de réaction (1), qui présente une section supérieure (11) essentiellement en forme de cylindre circulaire, qui est délimitée par deux surfaces circulaires (111, 112) et une surface enveloppante (113) et qui présente un axe longitudinal de cylindre, ainsi qu'une section inférieure (12),
- un orifice d'admission (2), qui est disposé dans une surface circulaire (111, 112) ou dans la surface enveloppante (113) de la section supérieure (11),
- un premier orifice de sortie (3) qui est disposé dans une paroi de la section inférieure (12),
- un deuxième orifice de sortie (4) qui est disposé dans la surface enveloppante (113) de la section supérieure (11) et qui se trouve à l'opposé du premier orifice de sortie (3),
- un dispositif d'enlèvement (5), qui est disposé de manière à pouvoir tourner autour de l'axe longitudinal du cylindre et qui est en contact avec les deux surfaces circulaires (111, 112) et la surface enveloppante (113), le dispositif d'enlèvement (5) étant réalisé sous forme de rotor présentant plusieurs pales (51) de rotor, et qui plonge dans la masse fondue (6) de prépolymère et la section transversale de la chambre de réaction (1), comprenant au moins une surface circulaire (111, 112) de la section supérieure (11), étant essentiellement en forme de goutte,
présentant les étapes de procédé suivantes :
a) introduction d'une masse fondue (6) de prépolymère dans une chambre de réaction (1) à travers un orifice d'admission (2),
b) polymérisation de la masse fondue (6) de prépolymère en une masse fondue (7) de polymère,
c) élimination de la masse fondue (7) de polymère de la chambre de réaction (1) via un premier orifice de sortie (3) de la chambre de réaction (1) et
d) élimination d'une substance gazeuse (8) de la chambre de réaction (1) via un deuxième orifice de sortie (4) dans la chambre de réaction (1), **caractérisé en ce que** des dépôts sur au moins une paroi interne de la chambre de réaction (1) sont éliminés par un dispositif d'enlèvement (5), qui plonge dans la masse fondue (6) de prépolymère, et sont transportés dans la masse fondue (6) de prépolymère.

2. Procédé selon la revendication 1, **caractérisé en ce que**
- l'orifice d'admission (2) est disposé dans une surface enveloppante (113) d'une première section (11) en forme de cylindre de la chambre de réaction (1),
- le dispositif d'enlèvement (5) tourne autour de l'axe longitudinal du cylindre de la première section (11) dans le sens dans lequel la masse fondue (6) de prépolymère s'écoule hors de l'orifice d'admission (2) dans la chambre de réaction (1).

3. Procédé selon la revendication 1 ou 2, **caractérisé en ce que** la vitesse à laquelle la masse fondue (7) de polymère se déplace vers le premier orifice (3) de sortie augmente avec la diminution de la distance par rapport au premier orifice de sortie (3).

4. Procédé selon l'une quelconque des revendications 1 à 3, **caractérisé en ce que** le polymère est choisi parmi les polymères thermoplastiques, de préférence les polyamides, les polyuréthanes thermoplastiques, les polyoléfines, les polymères aromatiques de vinyle, les polyesters, les polyacétals, les polycarbonates, les polysulfones, les polyéthersulfones et leurs mélanges.

5. Procédé selon l'une quelconque des revendications 1 à 4, **caractérisé en ce que** le polymère est un polyamide et la substance gazeuse est de la vapeur d'eau.

6. Procédé selon l'une quelconque des revendications 1 à 5, **caractérisé en ce que** le polymère est un polyamide partiellement aromatique, dans lequel sont incorporées au moins une unité récurrente présentant un groupe aromatique et au moins une unité récurrente présentant un groupe aliphatique ou cycloaliphatique.

7. Procédé selon l'une quelconque des revendications 1 à 6, **caractérisé en ce que** le polymère est un polyamide choisi parmi
PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.1/12, PA 6.T/6.1/6.10, PA 6.T/6.1/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T
et leurs copolymères et mélanges.
